# EUROPÄISCHE PATENTSCHRIFT

(11) **EP 1 092 052 B1**
(45) Veröffentlichungstag und Bekanntmachung des Hinweises auf die Patenterteilung: **10.09.2003**
(21) Anmeldenummer: 99926344.5
(22) Anmeldetag: 20.05.1999
(51) Int. Cl.: D01F 6/70

(54) **ELASTANFÄDEN UND VERFAHREN ZU IHRER HERSTELLUNG**
ELASTANE THREADS AND METHOD FOR THE PRODUCTION THEREOF
FILS D'ELASTANE ET LEUR PROCEDE DE PRODUCTION

(30) Priorität: 02.06.1998 DE 19824333
(43) Veröffentlichungstag der Anmeldung: 18.04.2001
(73) Patentinhaber: BAYER AG, 51368 Leverkusen (DE)
(72) Erfinder: KORTE, Siegfried, D-51519 Odenthal (DE); MEYER, Rolf-Volker, D-53804 Much (DE); HÜTTE, Stephan, D-51065 Köln (DE)
(86) Internationale Anmeldenummer: EP9903463
(87) Internationale Veröffentlichungsnummer: WO99063138

(56) Entgegenhaltungen:
- EP-A- 0 679 738
- DATABASE CHEMABS [Online] CHEMICAL ABSTRACTS SERVICE, COLUMBUS, OHIO, US SHOJI, HIROAKI ET AL: "Manufacture of elastic polyurethane yarns with improved sliding properties" retrieved from STN Database accession no. 127:19389 XP002113800 & JP 09 078348 A (NIPPON UNICAR CO., LTD., JAPAN) 1995

## Beschreibung

Die vorliegende Erfindung betrifft ein Verfahren zur Herstellung segmentierter Polyurethane mit einem verbesserten Verarbeitungsverhalten im Schmelzezustand und einer darauf basierenden rationellen Verspinnung zu hochelastischen, feintitrigen Elastanfäden und -filamenten mit verbesserten mechanischen und thermischen Eigenschaften durch Verwendung von hydroxyalkyl-terminierten Polysiloxanen in Kombination mit speziellen zur Vernetzung befähigten Polyisocyanaten bei der Umsetzung langkettiger, höhermolekularer Polyhydroxylverbindungen mit organischen Diisocyanaten und niedermolekularen Diolen sowie gegebenenfalls weiteren Hilfs- und Zusatzmitteln in der Schmelze. Die Erfindung betrifft auch die aus diesem Verfahren durch Direktspinnen und nach einer thermischen Behandlung gewonnenen Elastan-Fäden.

Elastane sind mono- oder multifile Endlosfäden, die zu mindestens 85 Gew.-% aus segmentierten Poly(urethan)en bzw. Poly(urethanharnstoff)en bestehen. Die fadenbildenden Polymere weisen eine Segmentstruktur auf, d. h. sie bestehen aus "kristallinen" und "amorphen" Blöcken ("Hartsegmente" und "Weichsegmente"). Die Hartsegmente wirken aufgrund ihrer "Kristallinität" als Fixpunkte des Netzwerks und sind damit maßgebend für die Festigkeit der aus den Polymeren hergestellten Formkörper oder Fasern. Die Weichsegmente hingegen, deren Glastemperatur unterhalb der Gebrauchstemperatur liegen muß, sind für die Elastizität der Elastane maßgebend.

Derartige Elastane werden üblicherweise durch Polyaddition von langkettigen Dihydroxylverbindungen (Makrodiole) mit Diisocyanaten und niedermolekularen Dihydroxyl- oder Diaminoverbindungen als Kettenverlängerern hergestellt. Für hochwertige Elastanfilamente (auch als Spandex bezeichnet) werden durch Kettenverlängerung mit Diaminen gewonnene Poly(urethanharnstoff)e verwendet, weil sie gegenüber den Diol-verlängerten Poly(urethan)en aufgrund einer größeren Zahl von Wasserstoff-brückenbindungen zwischen den Polymerketten einerseits einen hohen Hartsegment-schmelzpunkt sowie andererseits ausgezeichnete mechanisch-elastische Eigenschaften aufweisen. Die Elastanfasern werden üblicherweise durch Verspinnen von Lösungen dieser segmentierten Poly(urethanharnstoff)e in hochpolaren Lösemitteln wie Dimethylformamid und Dimethylacetamid mittels des sogenannten Trockenspinnverfahrens oder des Naßspinnverfahrens hergestellt.

Wegen des Verzichts auf diese relativ hochsiedenden, aprotischen Lösemittel ist ein Schmelzspinnverfahren aus ökonomischen und ökologischen Gründen den genannten Lösungsspinnverfahren prinzipiell vorzuziehen. Elastane, z.B. aus diaminverlängerten Poly(urethanharnstoff)en sind jedoch nicht ohne Zersetzung der Harnstoffgruppen in den Hartsegmenten aufschmelzbar, wie z.B. aus: Textilpraxis International 36, (1981) Seite 841 hervorgeht. Diaminverlängerten Poly(urethanharnstoff)en sind somit aus der Schmelze nicht verspinnbar. Demgegenüber lassen sich sogenannte thermoplastische Poly(urethan)e mit überwiegend Urethan-Hartsegmenten, die durch Kettenverlängerung mit nieder-molekularen Diolen anstelle von Diaminen erhalten werden, unter Duldung einer begrenzten Veringerung der Molmasse aus der Schmelze zu elastischen Fäden verspinnen. Der Einsatz derartiger Filamente wird jedoch dadurch eingeschränkt, daß sie aufgrund geringerer bindender Wechselwirkungen ihrer Hartsegmente und der damit verbundenen niedrigeren Erweichungstemperatur den bei der üblichen Verarbeitung und Behandlung von Elastanen auftretenden thermischen Belastungen nicht standhalten. Dies trifft insbesondere für die Thermofixierbarkeit der elastischen Fäden z.B. bei der Weiterverarbeitung mit Polyamid als Hartfaserkomponente zu Verbundgarnen bei 195°C zu. So führt die Verarbeitung handelsüblicher thermoplastischer Poly(urethan)e nicht zu brauchbaren Filamenten bzw. Flächenwaren.

Zur Erhöhung der thermischen Stabilität elastischer Fäden aus thermoplastischen Poly(urethan)en müssen die bindenden Wechselwirkungen zwischen den Makromolekülen, insbesondere zwischen den Hartsegmenten der Molekülketten der Polymere verbessert werden.

Nach aus dem Stand der Technik bekannten Verfahren gelingt dies besonders vorteilhaft, indem man bei der lösemittelfreien Synthese des Polyurethans neben den an sich bekannten difünktionellen Isocyanaten mindestens ein höher funktionelles Polyisocyanat, das vorzugsweise Isocyanuratgruppen enthält, verwendet und die PU-Reaktionsschmelze ohne weitere Zwischenschritte direkt verspinnt.

In der Europäischen Patentanmeldung EP-A 0 679 738 ist ein solches Verfahren beschrieben, das im Vergleich zu anderen zuvor schon bekannten Verfahren - beschrieben z.B. in DE-32 33 384 A1, EP 0 256 470 A2, DE-OS 16 69 402, EP 0 454 160 A2 und EP 0 397 121 A2 - die Herstellung von schmelzgesponnenen Elastanen ermöglicht, die nahezu vergleichbare mechanisch-elastische und thermische Eigenschaften wie konventionell aus Lösung gesponnenen Poly(urethanharnstoff)-Elastane haben.

Das in der EP-A 0 679 738 beschriebene Verfahren bedarf jedoch weiterer Verbesserungen. Insbesondere die in den Beispielen gegebenen experimentellen Hinweise lassen erkennen, daß das genannte Verfahren noch nicht die technische Sicherheit gewährleistet, um Elastane in gleichbleibend guter Qualität, in der gewünschten Typenvielfalt und bei hinreichend hoher Spinnleistung zu produzieren.

Legt man die in der EP-A 0 679 738 beschriebenen Experimente zugrunde, so werden vorzugsweise aus Einlochdüsen Fäden im Titerbereich von 70 - 160 dtex ersponnen. Die Spinngeschwindigkeitist mit 100 - 500 m/min - soweit hierzu überhaupt Angaben gemacht werden - vergleichsweise recht niedrig. An technisch fortschrittliche Verfahren der Elastanherstellung sind sowohl beim Lösungs - als auch beim Schmelzspinnen wesentlich höhere Anforderungen zu stellen. Das mehrfädige Spinnen (4-8 fädig) ist grundsätzlich Stand der Technik. Dabei werden aus Mehrlochdüsen insbesondere feintitrige Monofile (20 - 50 dtex) typischerweise mit einer Spinngeschwindigkeit von 600 - 1000 m/min ersponnen.

Die Nachstellung und Prüfung der in der EP-A 0 679 738 aufgeführten Rezepturen zeigte einige Defizite auf. Die Spinnfähigkeit der erzeugten Polyurethane ist im Schmelzezustand eingeschränkt. Die Düsenstandzeiten sind begrenzt und das Spinnen feintitriger Fäden (20 - 50 dtex) ist bei mehrfädiger Verfahrensführung nicht oder nur für einen kurzen Zeitraum möglich. Spinnleistungen mit Geschwindigkeiten > 500 in/min werden auf sicherer Basis nicht erreicht.

Die der Erfindung zugrundeliegende Aufgabe ist ein Verfahren zur Herstellung von elastischen PU-Fäden zur Verfügung zu stellen, welches gegenüber den bekannten Verfahren insbesondere die folgenden Vorteile aufweisen soll:
1. Die Herstellung des Poly(urethan)s und die Verspinnung sollte ohne den Zusatz eines Lösemittels erfolgen.
2. Die Herstellung des Poly(urethan)s und die Verspinnung sollte kontinuierlich erfolgen bei möglichst kurzer Stand- bzw. Verweilzeit der Schmelze. Insbesondere sollte es möglich sein unter Verzicht auf eine Zwischenisolierung des Polyurethans in einer Granulatform, die thermische Belastung und damit den möglichen Abbau des Polyurethans zu minimieren.
3. Die Synthese des Elastanrohstoffs sollte so erfolgen, daß beim Spinnen und Nachbehandeln der Fäden keine Spaltprodukte z.B. in Form von NCO-Verkappungsmitteln entstehen.
4. Die aus den Einsatzstoffen erzeugte Schmelze sollte keine stärker vernetzten Bestandteile in Form gelartiger Partikel enthalten und bei zeitlich konstanten rheologischen Eigenschaften eine sichere spinntechnische Verarbeitung gewährleisten, so daß auch bei hoher Spinngeschwindigkeit feintitrige Elastanfäden mit guten mechanischen und thermischen Eigenschaften entstehen.

Diese Aufgabe konnte mit der Ausarbeitung und Bereitstellung des nachstehend näher beschriebenen erfindungsgemäßen Verfahrens gelöst werden.

Es wurde überraschend gefunden, daß Elastanfäden mit den geforderten guten Eigenschaften und den genannten verfahrensbedingten Vorteilen dann zugänglich sind, wenn man bei der lösemittelfreien Synthese der Segmentstruktur aufweisenden Polyurethane neben den Makrodiolen ausgewählte Polysiloxane mit Hydroxyalkyl-Endgruppen und neben den difünktionellen Isocyanat-verbindungen mindestens ein höherfünktionelles Polyisocyanat verwendet und nach Zusatz von niedermolekularen Diolen als Kettenverlängerer ein Reaktionsprodukt im Schmelzezustand erzeugt und dieses ohne weitere Zwischenschritte direkt verspinnt.

Die Verwendung der vernetzend wirkenden höherfunktionellen Polyisocyanate in Kombination mit einbaufähigen Polysiloxanverbindungen führt zu schmelzeförmigen Reaktionsprodukten, die für das direkte Verspinnen ein vorteilhaftes Verarbeitungsverhalten aufweisen. Es entstehen bei gleichzeitigem Einsatz der genannten Komponenten deutlich weniger Gelpartikel, die den Spinnprozeß und die Faserqualität insbesondere bei der Herstellung von feintitrigen Fäden stark beeinträchtigen können. Die Schmelzviskosität der so gewonnenen Polyurethane kann durch die Verwendung der Polysiloxane erniedrigt werden. Als Folge wird das Schmelzspinnen auch über einen längeren Zeitraum beherrschbar. Druckaufbau an Schmelzefiltrationseinrichtungen und Druckschwankungen im Bereich der Spinndüsen sind weitgehend ausgeschlossen.

Gegenstand der Erfindung ist ein Verfahren zur Herstellung von Elastanfäden durch Umsetzung von:
(A) Makrodiolgemischen, bestehend wenigstens aus vorzugsweise linear aufgebauten Polyester-, Polyether- und/oder Polycarbonatdiolen mit einem Molekulargewicht von 1000 - 8000 g/mol (Zahlenmittel), bevorzugt von 1000 - 6000 g/mol, besonders bevorzugt von 1500 - 4000 g/mol und mindestens einer Hydroxyalkyl-Endgruppen aufweisenden Polysiloxanverbindung mit
(B) Isocyanatgemischen, bestehend aus Diisocyanaten und kleineren Anteilen an vorzugsweise aliphatisch strukturierten Polyisocyanaten mit einer mittleren NCO-Funktionalität größer als 2 und
(C) Hydroxyalkyl-substituierten Diolen mit einem Molekulargewicht (Zahlenmittel) bis 400 g/mol als Kettenverlängerungsmittel, alleine oder in Mischung und gegebenenfalls in Kombination mit niedermolekularen, unter (A) genannten Polysiloxanen
   und gegebenenfalls unter Zusatz von
(D) Katalysatoren, Stabilisatoren und weiteren Hilfs- und Betriebsstoffen, Verspinnen der daraus erhaltenen Polyurethane aus der Schmelze, Präparieren, Verstrecken, Relaxieren und dann thermisches Nachbehandeln der gewonnenen Fäden,
dadurch gekennzeichnet,
daß bei der Polyurethan-Synthese im Makrodiol-Gemisch (A) mindestens eine Hydroxyalkyl-Endgruppen aufweisende Polysiloxanverbindung mit einer OH-Funktionalität ≤ 2 und einem Molekulargewicht von 300 - 6000 g/mol (Zahlenmittel) eingesetzt wird und die Komponenten des Makrodiol-Gemisches (A) in einem solchen Mengenverhältnis eingesetzt werden, daß sich die Zahl der OH-Äquivalente der Polysiloxanverbindungen zur Zahl der OH-Äquivalente der übrigen Makrodiole wie 0,2 : 99,8 bis 30 : 70 verhält,
daß die Komponenten des Isocyanatgemisches (B) in solchen Mengen eingesetzt werden, daß das Verhältnis aus den Isocyanatäquivalenten der difunktionellen Komponenten gegenüber den höherfünktionellen 99,5 : 0,5 bis 80 : 20 beträgt,
die Umsetzung der Komponenten (A), (B) und (C) kontinuierlich nach einem Einstufenverfahren oder zweistufig nach dem Präpolymerisationsverfahren mit kontinuierlicher Kettenverlängerungsreaktion durchgeführt wird, wobei - bezogen auf die Summe der Komponenten (A) + (B) + (C) - der Anteil der Komponenten (B) + (C) im elastischen Faden insbesondere 5 - 30 Gew.-% beträgt
und daß die entstehende Reaktionsschmelze bevorzugt, gegebenenfalls unter Zusatz von Stabilisatoren und Gleitmitteln oder anderen Hilfsstoffen ( D ), direkt versponnen wird.

Die Angaben des Molekulargewichts beziehen sich, soweit nicht anders angegeben, auf die Zahlenmittel Mₙ des Molekulargewichts.

Entscheidend für die Durchführung und Beherrschung des erfindungsgemäßen Verfahrens ist, daß Makrodiol-Gemische (A) eingesetzt werden, die neben den üblicherweise eingesetzten Diolkomponenten auch Polysiloxan-Verbindungen mit Hydroxyalkyl-Endgruppen enthalten. Die im nachstehend aufgeführten Formelschema benannten bevorzugten Verbindungen werden in einem solchen Mengenverhältnis eingesetzt, daß sich die Zahl der OH-Äquivalente dieser Komponenten zur Zahl der OH-Äquivalente der übrigen Makrodiole wie 0,2 : 99,8 bis 30 : 70 verhält. Besonders bevorzugt sind ist ein Verhältnis der Zahl der OH-Äquivalente von 0,3 : 99,7 bis 10 : 90. 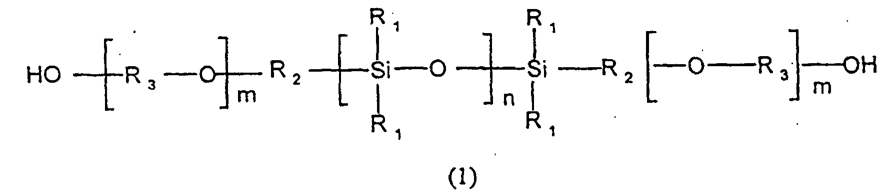 in Formel (1) bedeuten:
n eine Zahl von 2 - 70
R₁ einen (C₁ - C₄)-Alkylrest
R₂ einen (C₁ - C₄)- Alkylenrest
R₃ einen (C₁ - C₄) - Alkylenrest und
m eine Zahl von 0 - 6

Die OH-Funktionalität der verwendungsfähigen Polysiloxanverbindungen kann den Wert 2 geringfügig unterschreiten, sollte diesen aber möglichst nicht überschreiten. Das mittlere Molekulargewicht der Siloxan-Makrodiole beträgt bevorzugt von 300 - 6000 g/mol. Besonders geeignet sind Verbindungen mit einem Molekulargewicht von 1000 - 4000 g/mol und den folgenden Strukturmerkmalen: R₁ = CH₃ und m = 0.

Mengenmäßig dominierend im Makrodiolgemisch (A) sind bekannte Verbindungen, die man üblicherweise bei der Herstellung von thermoplastischen Polyurethanen bzw. von elastischen Filamenten aus Polyurethanen oder Poly(urethanhamstoff)en verwendet. Diese werden z.B. in der DE-A 28 32 352 oder in der US-A 3 719 708 aufgeführt. Beispielsweise seien genannt: Polyesterdiole, Polyetherdiole, Polycarbonat-diole oder Polyacetaldiole mit einem Molekulargewicht von 1000 - 8000 g/mol, bevorzugt von 1000 - 6000 g/mol, besonders bevorzugt von 1500 - 4000 g/mol. Besonders geeignet und deshalb bevorzugt eingesetzt werden Polyesterdiole und Polyetherdiole oder ihre Mischungen.

Als Polyesterdiole sind z.B. Dicarbonsäurepolyester aliphatischer Dicarbonsäuren geeignet, die sowohl mehrere Diole wie auch mehrere Dicarbonsäuren oder Hydroxycarbonsäuren enthalten können. Besonders geeignet sind Mischpolyester aus längerkettigen, bevorzugt sechs oder mehr Kohlenstoffatome enthaltenden Dicarbonsäuren, wie Sebazinsäure, Azelainsäure und vorzugsweise Adipinsäure und 2 bis 4 verschiedenen, vorzugsweise längerkenigen, besonders vier oder mehr C-Atome enthaltenden Diolen. Besonders geeignete Diole für diese Polyester sind 1,6-Hexandiol, 1,4-Butandiol, 2,2-Dimethyl-1,3-propandiol und 3-Methyl-1,5-pentandiol. Auch Lactonpolyesterdiole oder Mischpolyesterdiole auf Basis ε-Caprolacton und Methylvalerolacton sind als Verbindungen für das Komponentengemisch (A) geeignet.

Als langkettige Polyetherdiole eignen sich besonders Polytetramethylenoxiddiole oder ihre Copolyether mit anderen etherbildenden Verbindungen wie Ethylenoxid oder Propylenoxid. Es können auch Mischungen aus den genannten Verbindungen eingesetzt werden.

Bei dem Komponentengemisch (B) handelt es sich insbesondere um die bei der Herstellung von Polyurethanen typischen Diisocyanatverbindungen, denen vergleichsweise kleine Mengen an Polyisocyanaten zugesetzt werden, deren NCO-Funktionalität einen Wert größer als 2 aufweist. Geeignete Komponenten sind die an sich bekannten isocyanuratmodifizierten Polyisocyanate. Derartige von Diisocyanaten abgeleitete Oligomere sind z.B. in HOUBEN-WEYL "Methoden der organischen Chemie", Band E 20, "Makromolekulare Stoffe", Georg Thieme Verlag, Stuttgart, New York, 1987 auf den Seiten 1739 bis 1748 beschrieben.

Weiterhin können auch Polyisocyanate, basierend auf Oligomerisierungsprodukten mit Uretdion-Strukturelementen, verwendet werden.

Neben den vom 2,4-Toluoldiisocyanat und dessen Isomeren sowie den vom 4,4'-Diphenylmethandiisocyanat und dessen Isomeren abgeleiteten Oligomeren, sind die von aliphatischen Diisocyanaten abgeleiteten Oligomeren besonders gut verwendbar. Zu nennen sind hier die Oligomeren, die sich vom 1,6-Hexamethylen-diisocyanat und vom Isophorondiisocyanat ableiten.

Es können aber auch Oxazolidinon- und Isocyanuratgruppen aufweisende Zwischenprodukte eingesetzt werden, die z.B. gemäß EP 0 272 563 A2 durch Umsetzung mindestens eines organischen Polyisocyanats mit einer Epoxidgruppen aufweisenden organischen Verbindung entstehen. Vorteilhaft einsetzbare Produkte dieses Typs sind in der EP-A 95 1 054 790 genannt.

Die genannten Polyisocyanate sind Bestandteil eines Gemischs, das größere Mengen an gängigen aromatischen und/oder (cyclo)aliphatischen Diisocyanaten enthält. Diese sind z.B. im Kunststoff-Handbuch, Band VII, herausgegeben von Oertel, Carl Hanser Verlag, München, 2. Auflage, 1983, auf den Seiten 63 - 74 beschrieben. Besonders geeignet zur Herstellung von Elastanfäden sind die nachstehend genannten Diisocyanate:

2,4-Toluoldiisocyanat sowie die entsprechenden 2,4-/2,6-Diisocyanatisomerengemische und besonders 4,4'-Diphenylmethandiisocyanat bzw. entsprechende Isomerengemische mit untergeordneten Mengen an 2,4'- und/oder 2,2'-Isomeren. Besonders bevorzugt wird reines 4,4'-Diphenylmethandiisocyanat verwendet. Selbstverständlich ist es möglich, Mischungen von aromatischen Diisocyanaten zu verwenden. Als Mischungskomponenten oder als Einzelkomponenten sind weiterhin auch (cyclo)aliphatische Diisocyanate geeignet. Zu nennen sind hier 1,4-Butan-diisocyanat, 1,6-Hexamethylendiisocyanat, 1,8-Octamethylendiisocyanat, 1,4-Cyclohexyldiisocyanat, 4,4'-Dicyclohexylmethandiisocyanat, Tetramethylenxylylendiisocyanat und Isophorondiisocyanat. Die aufgeführten cycloaliphatischen Diisocyanate können in stereoisomerenreiner Form oder als Stereoisomeren-gemische eingesetzt werden.

Die Komponenten des Isocyanuratgemisches (B) werden in solchen Mengen eingesetzt, daß das Verhältnis aus den NCO-Äquivalenten der difunktionellen gegenüber der höherfunktionellen Komponenten 99,5 : 0,5 bis 80 : 20 beträgt.

Bei der Komponente (C) handelt es sich um hydroxyalkyl-substituierte Verbindungen mit einer OH-Funktionalität von 2 und mit einem Molekulargewicht bis 400 g/mol. Diese Diolverbindungen fungieren bei der Herstellung thermoplastischer Polyurethane bekanntermaßen als Kettenverlängerer. Sie können alleine oder als Mischung zugesetzt werden. Beispiele solcher Diole sind 1,2-Ethandiol, 1,2- und 1,3-Propandiol, 2,2-Dimethyl-1,3-propandiol, 1,6-Hexandiol, 3-Methyl-1,5-pentandiol, 1,4-Cyclohexandiol, 1,4-Bis-(2-hydroxyethoxybenzol) und Bis-(2-hydroxyethoxy)terephthalat. Bevorzugt werden1,4-Bis-(2-hydroxyethoxybenzol) und 1,6-Hexandiol, besonders bevorzugt 1,4-Butandiol als Kettenverlängerer verwendet. In Anteilen bis zu 5 Gew.-%, bezogen auf die Komponente (d), können gegebenenfalls neben den Diolen auch höherfunktionelle Polyole, wie z.B. Trimethylolpropan, Glycerin, 1,2,6-Hexantriol, Trimethylolethan und Pentaerythrit mitverwendet werden.

Es ist auch möglich, die aufgeführten Diolverbindungen zusammen mit den unter (A) genannten Polysiloxandiolen einzusetzen unter der Voraussetzung, daß deren OH-Funktionalität den Wert 2 aufweist und deren Molekulargewicht 300 - 1500 g/mol beträgt.

Es ist weiterhin möglich, gegebenenfalls auch aliphatische Amine, wie z.B. Ethylendiamin, 1,4-Tetramethylendiamin, Hexamethylendiamin, Isophorondiamin, Hydrazin und substituierte Hydrazine und Aminoalkohole, wie z.B. Ethanolamin, Diethanolamin und 3-Aminopropanol als Co-Kettenverlängerer in Anteilen bis zu 10 Gew.-% der Gesamtmenge an Komponente (C) einzusetzen.

Im Einklang mit dem erfindungsgemäßen Verfahren können gegebenenfalls außer den genannten Kettenverlängerern weitere Verbindungen mit gegenüber Isocyanaten monofunktionellen Gruppen als sogenannte Kettenabbrecher mitverwendet werden. Hierzu gehören z.B. Monoalkohole wie Butanol, 2-Ethylhexanol, Octanol, Dodecanol, die verschiedenen Amylalkohole, Cyclohexanol und Ethylenglykolmono-methylether sowie Monoamine, wie z.B. Diethylamin, Butyl- und Dibutylamin, Octylamin, Stearylamin, Methylstearylamin, Pyrrolidin, Piperidin und Cyclohexyl-amin.

Die unter (D) genannten Zusatzstoffe umfassen Katalysatoren für die Polyurethansynthese, Stabilisatoren sowie Hilfs- und Betriebsstoffe, die das Verarbeitungsverhalten der schmelzeförmigen Polyurethane und der daraus hergestellten elastischen Fäden verbessern können.

Geeignete Katalysatoren, welche insbesondere die Reaktion zwischen den NCO-Gruppen der Isocynatverbindungen (B) und den Hydroxylgruppen der Aufbaukomponenten (A) und (C) beschleunigen, sind insbesondere die nach dem Stand der Technik bekannten und üblichen tertiären Amine, wie z.B. Triethylamin, N,N-Dimethylcyclo-hexylamin, N-Methylmorpholin, N,N'-Dimethylpiperazin, 1,4-Diazabicyclo[2,2,2]octan und ähnliche sowie insbesondere organische Metallverbindungen wie Titansäureester, z.B. Dibutyltitanbis(acetylacetonat), Eisenverbindungen, Zinnverbindungen, z.B. Zinn(II)acetat, Zinn(II)octoat und Zinn(II)laurat oder die Zinndialkylsalze aliphatischer Carbonsäuren wie Dibutylzinndilaurat, Dibutylzinn-diacetat, Dioctylzinndiacetat oder ähnliche. Die Katalysatoren werden üblicherweise in Mengen von 0,001 Gew.-% bis 0,1 Gew.-% pro 100 Gew.-Teilen der Mischung aus Polyhydroxylverbindungen (A) und den Diolen (C) eingesetzt. Bei einer besonders bevorzugten Ausführung des erfindungsgemäßen Verfahrens wird auf die Zugabe eines Katalysators verzichtet.

Sowohl den Rohstoffen als auch der zu verspinnenden Polyurethan-Schmelze können die bei der Herstellung von Elastanfäden bekannten Stabilisatoren zusätzlich zugesetzt werden. Dies sind z.B. Antioxidantien, Lichtschutzmittel, UV-Absorber und Zusätze, welche die Chlorwasserbeständigkeit der Elastomerfäden verbessern können. Weitere gegebenenfalls erforderliche Zusatzstoffe sind Pigmente, Färbeadditive, Schönungsfarbstoffe und Antistatika. Als Hilfs- und Betriebsstoffe können insbesondere reibungsvermindernde Zusätze wie Magnesium-, Calcium-, Lithium-, Zink- und Aluminiumsalze langkettiger Carbonsäuren wie -stearate, -palmitate oder Dimerfettsäuren oder beliebige Gemische dieser Salze, Stearinsäuren, Stearylalkohol, Stearinsäureester und -amide sowie Fettsäureester des Pentaerythrits zugesetzt werden.

Zur Erzielung ausreichender mechanischer Eigenschaften der nach dem erfindungsgemäßen Verfahren hergestellten elastischen Fäden, wie z.B. hohe Dehnbarkeit, geringe Restdehnung und gutes Rückstellverhalten werden die Einsatzstoffe (A), (B) und (C) in einem solchen Mengenverhältnis umgesetzt, daß die Summe der Komponenten (B) + (C) in den elastischen Fäden bezogen auf die Summe aller Komponenten 5 - 30 Gew.-% ausmacht. Dieser als Hartsegmentgehalt bezeichnete Wert soll vorzugsweise 15 - 30 Gew.-% betragen. Besonders bevorzugt ist ein Verfahren daß Elastanfasern mit Werten von 18 - 25 Gew.-% liefert.

Zur Durchführung des erfindungsgemäßen Verfahrens können die Rohstoffe (A), (B), (C) und ( D) ohne Zusatz von Lösungsmitteln kontinuierlich, z.B. unter Verwendung von Mehrwellenschnecken, zu einem Polyurethan umgesetzt werden. Dies ist die einfachste Ausführungsform eines kontinuierlichen Prozesses. Die aus solchen Reaktionsprodukten erhaltenen elastischen Fäden verfügen aber mitunter nicht über die von Elastanen bekannten hochwertigen mechanischen und thermischen Eigenschaften, da die fadenbildenden Polyurethane noch nicht die optimale Segmentstruktur aufweisen. Gegenüber diesem One shot - Verfahren wird die Umsetzung der Komponenten mehrstufig nach dem sog. Präpolymer-Verfahren bevorzugt.

Bei dieser Verfahrensvariante wird aus den Komponenten (A) und (B) zunächst ein NCO-terminiertes Präpolymer hergestellt, wobei sich im Präpolymer die Zahl der NCO-Äquivalente des Komponentengemisches (B) zur Zahl der Hydroxylgruppen-Äquivalente des Komponentengemisches (A) insbesondere wie 1,1 : 1,0 bis 6,0 : 1,0 und bevorzugt 2,0 : 1,0 bis 4,0 : 1,0 verhält. Dabei soll sich, errechnet aus den Restisocyanat-Gehalten des Präpolymeren, ein Umsatzwert der Makrodiolkomponenten (A) von 80 - 110 % und bevorzugt von 90 - 105 % ergeben.

Die so hergestellten Präpolymeren werden nach den erfindungsgemäßen Verfahren mit dem Kettenverlängerungsmittel (C) kontinuierlich zur fadenbildenden Polyurethan-Schrnelze umgesetzt.

Die Herstellung der Präpolymeren kann aber auch in mehreren Teilschritten erfolgen, indem man diskontinuierlich oder kontinuierlich aus zumindest Teilen der Komponenten (A) und/oder zumindest Teilen der Komponenten (B) ein Vorprodukt herstellt, wobei sich im Vorprodukt die Summe der NCO-Äquivalente der Komponenten aus (B) zur Zahl der OH-Äquivalente der Komponenten aus (A) wie 1,05 : 1,0 bis 10,0 : 1,0 verhält, und dann dieses Vorprodukt mit den verbleibenden Anteilen der Komponenten (A) und/ oder (B) und dann mit den restlichen Ausgangsstoffen (C) umsetzt.

Die Herstellung der Präpolymeren kann diskontinuierlich oder kontinuierlich erfolgen. Als diskontinuierlicher Prozeß ist die s. g. Batch-Fahrweise bekannt. Dabei werden die Komponenten (A) und (B) in den genannten Mengenverhältnissen einstufig in einem Rührkesselreaktor intensiv gemischt und zur Reaktion gebracht. Die kinetische Kontrolle der Reaktion ist aber bei Umsetzungen in technisch relevanter Größenordnung schwierig, so daß mehr oder weniger starke Qualitätsschwankungen aufgrund ungenügender Reproduzierbarkeit auftreten. Zudem werden die für eine sichere Weiterverarbeitung erwünschten Standzeiten bei derart erzeugten Präpolymeren nicht immer erreicht.

Die Herstellung von Präpolymeren erfolgt daher vorzugsweise ein- oder mehrstufig in kontinuierlich betriebenen Reaktoren. Dies besitzt die Vorteile einer konstanteren Reaktionsführung und eines besseren Verarbeitungsverhaltens der Reaktionsschmelze und führt schließlich zu gleich-mäßigeren und besseren Fadenqualitäten. Für den kontinuierlichen Betrieb geeignet sind mit Misch- und Heiz/Kühlelementen bestückte Reaktoren, die einzeln oder in mehrfach parallel- und hintereinander geschalteter Form eingesetzt werden können. Dabei kann das Mischen der Komponenten und das Verteilen des Reaktionsgemisches sowohl statisch als auch dynamisch erfolgen. Zudem können zur besseren Kontrolle der Reaktion und zur Justierung der gewünschten Präpolymer-Qualität auch Kombinationen der genannten Strömungsreaktoreh mit üblichen Verweilzeitrohren genutzt werden.

Die Umsetzung der Komponenten (A) und (B) bei der Präpolymerherstellung erfolgt insbesondere bei einer Temperatur von 70 - 150°C und einer mittleren Verweilzeit von 15 - 120 Minuten.

Ein bevorzugtes Verfahren ist dadurch gekennzeichnet, daß die Herstellung der Polyurethan-Schmelzen nach dem Präpolymerisationsverfahren in allen Schritten kontinuierlich erfolgt, indem aus den Komponenten (A) und (B) oder aus Anteilen der Komponenten (A) und (B) in einem mit Mischelementen bestückten Strömungsreaktor oder in mehreren hintereinandergeschalteten Reaktoren dieses Typs und gegebenenfalls kombiniert mit üblichen Verweilzeitrohren bei einer Temperatur von 70 - 150°C und einer mittleren Verweilzeit von 15 - 120 Min. ein Präpolymer erzeugt wird und dieses mit dem Kettenverlängerungsmittel (C) und gegebenenfalls verbliebenen Anteilen der Komponenten (A) und (B) in einer mit Misch- und Knetelementen bestückten Mehrwellenschnecke bei Temperaturen von 80 - 270°C und bei mittleren Verweilzeiten der Schmelze von 0,5 - 15 Min. zum Polyurethan umgesetzt wird.

Derart kontinuierlich erzeugte Vorprodukte werden entweder nach kurzzeitiger Zwischenlagerung in einem Pufferbehälter oder in einer bevorzugten Ausfühmngsform direkt mit dem Kettenverlängerungsmittel (C) und gegebenenfalls verbleibenden Restanteilen der Rezepturkomponenten (A) und (B) kontinuierlich umgesetzt.

Geeignete Apparate zur Durchführung der Kettenverlängerungsreaktion sind kontinuierlich zu betreibende Kneter und vorzugsweise Schneckenreaktoren. Insbesondere kommen Mehrwellenschnecken zum Einsatz, die durch die besondere Anordnung von Misch-, Knet- und Förderelementen auf die besonderen Bedingungen der Reaktion eingestellt werden können. Derartige Mehrwellenschnecken sind selbstreinigend. Sinnvollerweise setzt man zur exakten Aussteuerung der Reaktion Maschinen ein, die aus mehreren getrennt heiz- und kühlbaren Gehäuseteilen aufgebaut und nach Einzugszone (Zudosierung der Reaktionskomponenten), Reaktionszonen und Extrusionszone gegliedert sind.

Bei der Durchführung des bevorzugten erfindungsgemäßen Verfahrens werden das Präpolymer und die restlichen Komponenten (C) und (D) entweder einzeln oder teilweise vermischt an dergleichen Stelle (bevorzugt in das erste Gehäuse) oder an verschiedenen Stellen kontinuierlich in die Schneckenmaschine eingespeist. Die Hilfs- und Zusatzstoffe (D), wie z.B. die üblichen Spinnzusätze und Stabilisatoren werden vorzugsweise erst nach der Reaktionszone zudosiert. In der Einzugszone liegt die Temperatur insbesondere bei 70°C bis 150°C, vorzugsweise bei 90°C bis 120°C, in der Reaktionszone liegt sie insbesondere bei 100°C bis 260°C, vorzugsweise bei 150°C bis 240°C, und in der Extrusionszone insbesondere bei 150°C bis 270°C, bevorzugt bei 190°C bis 240°C. Die Verweilzeit der Schmelze in der Schneckenmaschine beträgt insbesondere 0,5 bis 20 Minuten, bevorzugt 1 Minute bis 10 Minuten, besonders bevorzugt 1 Minute bis 5 Minuten.

Die Reaktion, bestehend aus Präpolymerbildung und Kettenverlängerung, kann bevorzugt insgesamt so geführt werden, daß der Zahlenwert, gebildet aus dem Verhältnis der Isocyanat-Äquivalente und der Summe der Zerewitinoff-aktiven Wasserstoff-Äquivalente der Komponenten (A) und (C), vor der Umsetzung 1,00 - 1,15 und bevorzugt 1,03 - 1,10 beträgt.

Es ist vorteilhaft nach der zielgerechten Umsetzung der Komponenten die erzeugte Polyurethan-Schmelze zu entgasen. Hierzu können im Bereich der Extrusionszone in dnickentlasteten Teilen der Schnecke sogenannte Ausdampfdome installiert werden.

Am Ende der Schnecke wird die Reaktionsschnecke über ein Adapter- und Verteilersystem direkt den Spinnpumpen zugeführt und von diesen nach Passieren einer Filtereinrichtung in die Düsenblocke gepreßt.

Das Ausspinnen der Fäden erfolgt insbesondere bei einer Temperatur von 180°C bis 270°C, vorzugsweise bei einer Düsentemperatur von 190 - 250°C. Die entstehenden Filamente werden abgekühlt, z.B. durch Anblasung mit Luft. Die Abzugsgeschwindigkeit der Fäden beträgt insbesondere, abhängig von deren Feinheit (Titer), von 100 m/min, bis 1000 m/min., bevorzugt von 200 m/min. bis 800 m/min..

Bevorzugt ist ein Verfahren, bei dem die Polyurethan-Schmelze nach dem Einmischen von Gleitmitteln und von Stabilisatoren ohne weitere Zwischenschritte bei einer Temperatur von 180 - 250°C mehrfädig bei einer Geschwindigkeit von 200 - 1000 m/min. versponnen wird.

Die Filamente werden dann z.B. kontinuierlich, d. h. ohne Zwischenablage, verstreckt. Bevorzugt werden die Fäden nach dem Abkühlen mit einer Präparation versehen, im Verhältnis 1,1 : 1 bis 6 : 1 verstreckt und anschließend, d. h. vor dem Aufwickeln, relaxiert.

Besonders bevorzugt ist eine Kaltverstreckung bei einer Temperatur von 20 - 50°C bei einem Streckgrad von 1,05 bis 5,0, vorzugsweise von 1,1 - 2,5. Die Filamente werden anschließend nach Durchlaufen einer Relaxationszone und nach Aufbringen einer für Elastane üblichen Präparation bei einer Geschwindigkeit von 200 - 1200 m/min, bevorzugt von 400 - 1000 m/min aufgewickelt.

Das erfindungsgemäße Verfahren ermöglicht es, elastische Garne in monofiler und multifiler Form herzustellen. Bevorzugt werden Monofilamente ersponnen. Darüber hinaus gelingt es, aufgrund der überragenden Qualität der erzeugten Polyurethan-Schmelze und dem daraus resultierenden guten Spinnverhalten auch feintitrige Fäden (mit ca. 20 dtex) bei sehr guten Spinnleistungen mehrfädig zu spinnen, nachzubehandeln und zu wickeln.

Die auf Spulen gewickelten Fäden werden anschließend insbesondere einer thermischen Nachbehandlung (Temperung), insbesondere bei einer Temperatur von 50 - 120°C, bevorzugt von 60 - 100°C für 1 Std. bis 96 Stdn., vorzugsweise für 16 Stdn. bis 48 Stdn. unterworfen. Vorteilhaft ist es, die Fäden einem variablen Temperprogramm zu unterwerfen, derart, daß beginnend bei niedrigen Temperaturen die Belastung auf bis zu maximal z.B. 120°C gesteigert wird. Diese Temperung kann sowohl im Vakuum wie auch in Luft oder inerten Gasen erfolgen, bevorzugt wird in Luft getempert.

Die Intensität der Temperung richtet sich nach der chemischen und physikalischen Grundstruktur der Fäden sowie nach deren Feinheit (Titer). Die Temperungsbedingungen sind so zu wählen, daß nach einer derartigen Behandlung Spulen mit einem für die Weiterverarbeitung ausreichenden Ablaufverhalten vorliegen.

Die nach dem erfindungsgemäßen Verfahren hergestellten elastischen Fäden, die auch Gegenstand der Erfindung sind, zeichnen sich durch geringe Restdehnung von höchstens 25%, bevorzugt 5 - 25 %, insbesondere von 5 - 20 %, bei einer gleichzeitig hohen Höchstzugkraftdehnung von größer oder gleich 400 %, insbesondere von 400 - 650 % und vorzugsweise von 450 - 650 %, aus. Dabei beobachtet man das für konventionelle Elastane typische Kraft/Dehnungs- und Hystereseverhalten. Feinheitsbezogene Festigkeitswerte > 1,0 cN/dtex werden bei den bevorzugten Fasern überwiegend erreicht. Dies ist eine wesentliche Voraussetzung für die Herstellung von feintitrigen Fäden. Deren Herstellung gelingt nach dem erfindungsgemäßen Verfahren bis in den Bereich von 20 dtex - Monofilamenten problemlos. Die besonders bevorzugten Elastanfäden weisen einen Titer von 20 - 50 dtex auf.

Insbesondere besitzen die nach dem erfindungsgemäßen Verfahren hergestellten elastischen Filamente eine hohe Stabilität gegen thermische Belastung und plastisches Fließen, wie sie in einem HDT (Heat Distortion Temperature)-Wert von über 185°C und ganz besonders in einer Heßreißzeit von mindestens 5 s bevorzugt von mindestens 15 s, zum Ausdruck kommt.

Die elastischen Filamente können hervorragend allein oder in Kombinationsgarnen zusammen mit anderen Filamenten aus z.B. Polyamid, Wolle, Baumwolle und Polyester beispielsweise mittels Kettwirken, Rund- und Flachstricken zu textilen Waren verarbeitet werden. Neben dem Einsatz in der Beinbekleidung sind die nach dem erfindungsgemäßen Verfahren hergestellten elastischen Fäden aufgrund der hohen thermischen Stabilität ganz besonders für die Anwendung in Gebieten, die eine gezielte Thermofixierbarkeit erfordern, geeignet, wie z.B. Wäsche, Mieder, Sportbekleidung, Oberbekleidung und Bezugsstoffe.

Weiterer Gegenstand der Erfindung ist die Verwendung der nach dem erfindungsgemäßen Verfahren erhaltenen Elastanfäden zur Herstellung von Kombinationsgarnen und textilen Flächengebilden, wie Gestricken, Geweben oder Gewirken.

## Patentansprüche

1. Verfahren zur Herstellung von Elastanfäden durch Umsetzung von:
(A) Makrodiolgemischen, bestehend wenigstens aus Polyester-, Polyether- und/oder Polycarbonatdiolen mit einem Molekulargewicht von 1000 - 8000 g/mol (Zahlenmittel) und mindestens einer Hydroxyalkyl-Endgruppen aufweisenden Polysiloxanverbindung mit
(B) Isocyanatgemischen, bestehend aus Diisocyanaten und kleineren Anteilen an Polyisocyanaten mit einer mittleren NCO-Funktionalität größer als 2 und
(C) Hydroxyalkyl-substituierten Diolen mit einem Molekulargewicht (Zahlenmittel) bis 400 g/mol als Kettenverlängerungsmittel, alleine oder in Mischung und gegebenenfalls in Kombination mit niedermolekularen, unter (A) genannten Polysiloxanen
und gegebenenfalls unter Zusatz von
(D) Katalysatoren, Stabilisatoren und weiteren Hilfs- und Betriebsstoffen, Verspinnen der daraus erhaltenen Polyurethane aus der Schmelze, Präparieren, Verstrecken, Relaxieren und dann thermisches Nachbehandeln der gewonnenen Fäden, **dadurch gekennzeichnet,**
**daß** bei der Polyurethan-Synthese im Makrodiol-Gemisch (A) mindestens eine Hydroxyalkyl-Endgruppen aufweisende Polysiloxanverbindung mit einer OH-Funktionalität ≤ 2 und einem Molekulargewicht von 300 - 6000 g/mol (Zahlenmittel) eingesetzt wird und die Komponenten des Makrodiol-Gemisches (A) in einem solchen Mengenverhältnis eingesetzt werden, daß sich die Zahl der OH-Äquivalente der Polysiloxanverbindungen zur Zahl der OH-Äquivalente der übrigen Makrodiole wie 0,2 : 99,8 bis 30 : 70 verhält,
**daß** die Komponenten des Isocyanatgemisches (B) in solchen Mengen eingesetzt werden, daß das Verhältnis aus den Isocyanatäquivalenten der difunktionellen Komponenten gegenüber den höherfunktionellen 99,5 : 0,5 bis 80 : 20 beträgt,
die Umsetzung der Komponenten (A), (B) und (C) kontinuierlich nach einem Einstufenverfahren oder zweistufig nach dem Präpolymerisationsverfahren mit kontinuierlicher Kettenverlängerungsreaktion durchgeführt wird und daß die entstehende Reaktionsschmelze gegebenenfalls unter Zusatz von Stabilisatoren und Gleitmitteln oder anderen Hilfsstoffen (D) versponnen wird.

2. Verfahren nach Anspruch 1, **dadurch gekennzeichnet, daß** bezogen auf die Summe der Komponenten (A) + (B) + (C) - der Anteil der Komponenten (B) + (C) im elastischen Faden 5 - 30 Gew.-% beträgt und daß die entstehende Reaktionsschmelze, gegebenenfalls unter Zusatz von Stabilisatoren und Gleitmitteln oder anderen Hilfsstoffen (D), direkt versponnen wird.

3. Verfahren gemäß Anspruch 1 oder 2, **dadurch gekennzeichnet, daß** nach dem Präpolymerisationsverfahren aus den Komponenten (A) und (B) zunächst ein NCO-terminiertes Präpolymer diskontinuierlich oder kontinuierlich hergestellt wird, wobei sich im Präpolymer die Zahl der NCO-Äquivalente der Komponenten (B) zur Zahl der OH-Äquivalente der Komponenten (A) wie 1,1 : 1 bis 6 : 1 verhält, und daß dann dieses Präpolymer mit dem Kettenverlängerungsmittel (C) kontinuierlich zum Polyurethan umgesetzt wird.

4. Verfahren gemäß Anspruch 1 oder 2, **dadurch gekennzeichnet, daß** nach dem Präpolymerisationsverfahren in mehreren Schritten diskontinuierlich oder kontinuierlich aus zumindest Teilen der Komponenten (A) und zumindest Teilen der Komponenten (B) ein Vorprodukt hergestellt wird, wobei sich im Vorprodukt die Summe der NCO-Äquivalente der Komponenten (B) zur Zahl der OH-Äquivalente der Komponenten (A) wie 1,05 : 1 bis 10 : 1 verhält, und daß dann dieses Vorprodukt mit den verbleibenden Anteilen der Komponenten (A) und (B) und den restlichen Ausgangsstoffen (C) kontinuierlich zum Polyurethan umgesetzt wird.

5. Verfahren gemäß den Ansprüchen 1 bis 4, **dadurch gekennzeichnet, daß** der aus den Rezepturangaben ermittelte Wert, gebildet aus dem Verhältnis der Isocyanat-Äquivalente der Komponenten (B) und den Zerewitinoff-aktiven Wasserstoffäquivalenten der Komponenten (A) und (C) 1,00 - 1,15 beträgt.

6. Verfahren gemäß den Ansprüchen 1 bis 5, **dadurch gekennzeichnet, daß** die Herstellung der Polyurethan-Schmelzen nach dem Präpolymerisationsverfahren in allen Schritten kontinuierlich erfolgt, indem aus den Komponenten (A) und (B) oder aus Anteilen der Komponenten (A) und (B) in einem mit Mischelementen bestückten Strömungsreaktor oder in mehreren hintereinandergeschalteten Reaktoren dieses Typs und gegebenenfalls kombiniert mit üblichen Verweilzeitrohren bei einer Temperatur von 70 - 150°C und einer mittleren Verweilzeit von 15 - 120 Min. ein Präpolymer erzeugt wird und dieses mit dem Kettenverlängerungsmittel (C) und gegebenenfalls verbliebenen Anteilen der Komponenten (A) und (B) in einer mit Misch- und Knetelementen bestückten Mehrwellenschnecke bei Temperaturen von 80 - 270°C und bei mittleren Verweilzeiten der Schmelze von 0,5 - 15 Min. zum Polyurethan umgesetzt wird.

7. Verfahren gemäß den Ansprüchen 1 bis 6, **dadurch gekennzeichnet, daß** die Polyurethan-Schmelze nach dem Einmischen von Gleitmitteln und von Stabilisatoren ohne weitere Zwischenschritte bei einer Temperatur von 180 - 250°C mehrfädig bei einer Geschwindigkeit von 200 - 1000 m/min, versponnen wird.

8. Verfahren gemäß den Ansprüchen 1 bis 7, **dadurch gekennzeichnet, daß** die Fäden nach dem Abkühlen mit einer Präparation versehen, im Verhältnis 1,1 : 1 bis 6 : 1 verstreckt und anschließend, d. h. vor dem Aurwickeln, relaxiert werden.

9. Verfahren gemäß den Ansprüchen 1 bis 8, **dadurch gekennzeichnet, daß** die Fäden - auf Spulen gewickelt - einer thermischen Nachbehandlung bei einer Temperatur von 50 - 120°C über 1 bis 96 Stunden unterzogen werden.

10. Verfahren gemäß den Ansprüchen 1 bis 9, **dadurch gekennzeichnet, daß** als Makrodiole (A) Polyester-, Polyether- und/oder Polycarbonatdiole mit Molekulargewichten von 1000 - 6000 g/mol, vorzugsweise von 1500 - 4000 g/mol, in Mischung mit Hydroxyalkyl-Endgruppen aufweisenden Polysiloxanverbindungen mit einer OH-Funktionalität von 2 und Molekulargewichten von 1000 - 4000 g/mol eingesetzt werden.

11. Verfahren gemäß den Ansprüchen 1 bis 10, **dadurch gekennzeichnet, daß** als Isocyanatverbindungen (B) aromatische Diisocyanate, gegebenenfalls kombiniert mit geringen Anteilen an (cyclo)aliphatischen Diisocyanaten, jedoch in Mischung mit aliphatisch strukturierten, isocyanuratmodifizierten Polyisocyanaten und/oder von (cyclo) aliphatischen Diisocyanaten abgeleiteten Oligomeren mit einerNCO-Funktionalität > 2 eingesetzt werden.

12. Verfahren gemäß den Ansprüchen 1 bis 11, **dadurch gekennzeichnet, daß** als Kettenverlängerungsmittel (C) die Diole 1,2-Ethandiol, 1,2- und 1,3-Propandiol, 1,4-Butandiol, 2,2-Dimethyl-1,3-propandiol, 1,6-Hexandiol, 3-Methyl-1,5-pentandiol, 1,4-Cyclohexandiol und/oder 1,4-Bis-(2-hydroxyethoxybenzol) eingesetzt werden, gegebenenfalls in Kombination mit hydroxy alkyl-terminierten Polysiloxanen mit einer OH-Funktionalität von 2 und Molekulargewichten von 300 -1500 g/mol.

13. Elastanfäden erhältlich aus einem Verfahren gemäß einem der Ansprüche 1 bis 12.

14. Elastanfäden nach Anspruch 13 mit einer Feinheitsfestigkeit von > 1,0 cN/dtex, einer Höchstzugkraftdehnung von größer oder gleich 400 % und einem Restdehnungswert von höchstens 25 %.

15. Elastanfäden nach Anspruch 13 oder 14 mit einem Heat Distortion Temperature (HDT)-Wert von mindestens 185°C und einer Heißreißzeit von mindestens 10 sec.

16. Elastanfäden gemäß einem der Ansprüche 13 bis 15, **dadurch gekennzeichnet, daß** sie einen Titer von 20 - 50 dtex aufweisen.

17. Verwendung der Elastanfäden nach den Ansprüchen 13 bis 16 zur Herstellung von Kombinationsgarnen und textilen Flächengebilden.

## Claims

1. Process for the preparation of elastane threads by reaction of:
(A) macro-diol mixtures comprising at least polyester-, polyether- and/or polycarbonate-diols having a molecular weight of 1,000 - 8,000 g/mol (number-average) and at least one polysiloxane compound containing hydroxyalkyl end groups with
(B) isocyanate mixtures comprising diisocyanates and relatively small amounts of polyisocyanates having an average NCO functionality of greater than 2 and
(C) hydroxyalkyl-substituted diols having a molecular weight (number-average) of up to 400 g/mol as chain-lengthening agents, by themselves or as a mixture and optionally in combination with low molecular weight polysiloxanes mentioned under (A)
and optionally with the addition of
(D) catalysts, stabilizers and further auxiliary and operating substance,
spinning, from the melt, of the polyurethanes obtained therefrom, and finishing, stretching, relaxation and then thermal after-treatment of the threads obtained, **characterized in that**
at least one polysiloxane compound containing hydroxyalkyl end groups and having an OH functionality of ≤ 2 and a molecular weight of 300 - 6,000 g/mol (number-average) is employed in the macro-diol mixture (A) in the polyurethane synthesis, and the components of the macro-diol mixture (A) are employed in a ratio of amounts such that the number of OH equivalents of the polysiloxane compounds to the number of OH equivalents of the other macro-diols is 0.2 : 99.8 to 30 : 70,
**in that** the components of the isocyanate mixture (B) are employed in amounts such that the ratio of the isocyanate equivalents of the difunctional components to those of higher functionality is 99.5 : 0.5 to 80 : 20,
the reaction of components (A), (B) and (C) is carried out continuously by a one-stage process or in two stages by the prepolymerization process with a continuous chain-lengthening reaction, and **in that** the reaction melt formed is spun, optionally with the addition of stabilizers and lubricants or other auxiliary substances (D).

2. Process according to claim 1, **characterized in that**, based on the sum of components (A) + (B) + (C) - the content of components (B) + (C) in the elastic thread is 5 - 30 wt.%, and **in that** the reaction melt formed is spun directly, optionally with the addition of stabilizers and lubricants or other auxiliaries (D).

3. Process according to claim 1 or 2, **characterized in that** an NCO-terminated prepolymer is first prepared discontinuously or continuously from components (A) and (B) by the prepolymerization process, the number of NCO equivalents of components (B) to the number of OH equivalents of components (A) in the prepolymer being 1.1 : 1 to 6 : 1, and **in that** this prepolymer is reacted continuously with the chain-lengthening agent (C) to give the polyurethane.

4. Process according to claim 1 or 2, **characterized in that** a precursor is prepared in several steps discontinuously or continuously from at least portions of components (A) and at least portions of components (B) by the prepolymerization process, the sum of NCO equivalents of components (B) to the number of OH equivalents of components (A) in the precursor being 1.05 : 1 to 10 : 1, and **in that** this precursor is then reacted continuously with the remaining amounts of components (A) and (B) and the remaining starting substances (C) to give the polyurethane.

5. Process according to claims 1 to 4, **characterized in that** the value, determined from the recipe data, of the ratio of the isocyanate equivalents of components (B) and the Zerewitinoff-active hydrogen equivalents of components (A) and (C) is 1.00 - 1.15.

6. Process according to claims 1 to 5, **characterized in that** the preparation of the polyurethane melts by the prepolymerization process is carried out continuously in all steps by a procedure in which a prepolymer is produced from components (A) and (B) or from portions of components (A) and (B) in a flow reactor equipped with mixing elements or in several reactors of this type connected in series and optionally in combination with conventional dwell tubes at a temperature of 70 - 150°C and an average dwell time of 15 - 120 min, and this is reacted with the chain-lengthening agent (C) and optionally remaining portions of components (A) and (B) in a multi-shaft screw equipped with mixing and kneading elements at temperatures of 80 - 270°C and at average dwell times of the melt of 0.5 - 15 min to give the polyurethane.

7. Process according to claims 1 to 6, **characterized in that**, after mixing-in of lubricants and stabilizers, the polyurethane melt is spun at a temperature of 180 - 250°C in several threads at a speed of 200 - 1,000 m/min without further intermediate steps.

8. Process according to claims 1 to 7, **characterized in that**, after cooling, the threads are provided with a finish, stretched in a ratio of 1.1 : 1 to 6 : 1 and then relaxed, i.e. before being wound up.

9. Process according to claims 1 to 8, **characterized in that** the threads - wound on bobbins - are subjected to a thermal after-treatment at a temperature of 50 to 120°C for 1 to 96 hours.

10. Process according to claims 1 to 9, **characterized in that** polyester-, polyether- and/or polycarbonate-diols having molecular weights of 1,000 - 6,000 g/mol, preferably 1,500 - 4,000 g/mol, as a mixture with polysiloxane compounds containing hydroxyalkyl end groups and having an OH functionality of 2 and molecular weights of 1,000 - 4,000 g/mol, are employed as macro-diols (A).

11. Process according to claims 1 to 10, **characterized in that** aromatic diisocyanates, optionally combined with small amounts of (cyclo)aliphatic diisocyanates, but as a mixture with isocyanurate-modified polyisocyanates of aliphatic structure and/or oligomers derived from (cyclo)aliphatic diisocyanates and having an NCO functionality of > 2, are employed as isocyanate compounds (B).

12. Process according to claims 1 to 11, **characterized in that** the diols 1,2-ethanediol, 1,2- and 1,3-propanediol, 1,4-butanediol, 2,2-dimethyl-1,3-propanediol, 1,6-hexanediol, 3-methyl-1,5-pentanediol, 1,4-cyclohexanediol and/or 1,4-bis-(2-hydroxyethoxybenzene) are employed as chain-lengthening agents (C), optionally in combination with hydroxyalkyl-terminated polysiloxanes with an OH functionality of 2 and molecular weights of 300 - 1,500 g/mol.

13. Elastane threads obtainable from a process according to one of claims 1 to 12.

14. Elastane threads according to claim 13 with a breaking tenacity of > 1.0 cN/dtex, an elongation at break of greater than or equal to 400% and a residual elongation value of not more than 25%.

15. Elastane threads according to claim 13 or 14 with a heat distortion temperature (HDT) value of at least 185°C and a hot tear time of at least 10 sec.

16. Elastane threads according to one of claims 13 to 15, **characterized in that** they have a denier of 20 - 50 dtex.

17. Use of the elastane threads according to claims 13 to 16 for the production of combination yarns and textile sheet-like structures.

## Revendications

1. Procédé pour la fabrication de filaments d'élasthanne par réaction de :
(A) des mélanges de macrodiols consistant au moins en polyester-, polyéther- et/ou polycarbonate-diols de poids moléculaire 1000 à 8000 g/mol (moyenne en nombre) et au moins un polysiloxane à groupes terminaux hydroxyalkyle, avec
(B) des mélanges d'isocyanates consistant en diisocyanates et plus petites proportions de polyisocyanates à une fonctionnalité moyenne en NCO supérieure à 2 et
(C) des diols à substituants hydroxyalkyle de poids moléculaire (moyenne en nombre) allant jusqu'à 400 g/mol et servant d'agents d'allongement des chaînes, seuls ou en mélange et le cas échéant en combinaison avec des polysiloxanes à bas poids moléculaire du type mentionné ci-dessus sous (A),
et le cas échéant avec adjonction de
(D) des catalyseurs, des stabilisants et d'autres produits auxiliaires et additifs,
filage des polyuréthannes obtenus à l'état fondu, préparation, étirage, relaxation et traitement complémentaire thermique des filaments obtenus,
**caractérisé en ce que**
à la synthèse des polyuréthannes, il y a dans le mélange de macrodiols (A) au moins un polysiloxane à groupes terminaux hydroxyalkyle ayant une fonctionnalité en groupes OH inférieure ou égale à 2 et un poids moléculaire de 300 à 6000 g/mol (moyenne en nombre) et les composants du mélange de macrodiols (A) sont mis en oeuvre à des proportions correspondant à un rapport de 0,2:99,8 à 30:70 entre le nombre des équivalents de groupes OH des polysiloxanes et le nombre des équivalents de groupes OH des autres macrodiols,
les composants du mélange d'isocyanates (B) sont mis en oeuvre à des proportions correspondant à un rapport de 99,5:0,5 à 80:20 entre les équivalents de groupes isocyanate des composants difonctionnels et les équivalents de groupes isocyanate des composants à plus forte fonctionnalité,
La réaction des composants (A), (B) et (C) est réalisée en continu, en un seul stade ou en deux stades opératoires par la technique de prépolymérisation avec réaction continue d'allongement des chaînes, et la masse de réaction fondue est filée le cas échéant avec adjonction de stabilisants et agents lubrifiants ou autres produits auxiliaires (D).

2. Procédé selon la revendication 1, **caractérisé en ce que**, par rapport à la somme des composants (A) + (B) + (C), la fraction des composants (B) + (C) dans les filaments élastiques représente de 5 à 30 % en poids et **en ce que** la masse de réaction obtenue, le cas échéant après adjonction de stabilisants et d'agents lubrifiants ou d'autres produits auxiliaires (D), est filée directement.

3. Procédé selon la revendication 1 ou 2, **caractérisé en ce que** l'on prépare d'abord, en discontinu ou en continu, à partir des composants (A) et (B), par la technique de prépolymérisation, un prépolymère à groupes terminaux NCO dans lequel le nombre des équivalents de NCO des composants (B) et le nombre des équivalents d'OH des composants (A) sont entre eux dans un rapport de 1,1:1 à 6:1, puis on convertit ce prépolymère en continu, avec l'agent d'allongement des chaînes (C), en le polyuréthanne.

4. Procédé selon la revendication 1 ou 2, **caractérisé en ce que** l'on prépare par la technique de prépolymérisation en plusieurs stades opératoires, en discontinu ou en continu, à partir d'une partie au moins des composants (A) et d'une partie au moins des composants (B), un produit intermédiaire dans lequel la somme des équivalents de NCO des composants (B) et la somme des équivalents d'OH des composants (A) sont entre elles dans un rapport de 1,05:1 à 10:1 puis on convertit ce produit intermédiaire en continu, avec le restant des composants (A) et (B) et les composants de départ restants (C), en le polyuréthanne.

5. Procédé selon les revendications 1 à 4, **caractérisé en ce que** dans les matières premières mises en oeuvre, le rapport entre les équivalents d'isocyanate des composants (B) et les équivalents d'hydrogène actif selon Zerewitinoff des composants (A) et (C) va de 1,00 à 1,15.

6. Procédé selon les revendications 1 à 5, **caractérisé en ce que** la préparation de la masse fondue de polyuréthanne par la technique de prépolymérisation est réalisée dans tous les stades en continu **en ce que**, à partir des composants (A) et (B) ou de parties des composants (A) et (B), on forme un prépolymère dans un réacteur à écoulement équipé d'éléments de mélange ou dans plusieurs réacteurs de ce type disposés en série et le cas échéant combinés avec des conduits de passage usuels, à une température de 70 à 150°C et une durée de passage moyenne de 15 à 120 min puis on convertit ce prépolymère en polyuréthanne avec l'agent d'allongement des chaînes (C) et le cas échéant les parties restantes des composants (A) et (B) dans un appareil à plusieurs vis équipé d'éléments de mélange et de malaxage à des températures de 80 à 270°C et des durées de passage moyennes de 0,5 à 15 min pour la masse fondue.

7. Procédé selon les revendications 1 à 6, **caractérisé en ce que** la masse fondue de polyuréthanne, après addition et mélange d'agents lubrifiants et de stabilisants, est filée sans autre traitement intermédiaire à une température de 180 à 250°C et une vitesse de 200 à 1000 m/min dans des filières à plusieurs orifices.

8. Procédé selon les revendications 1 à 7, **caractérisé en ce que** sur les filaments, après refroidissement, on applique une préparation, on étire dans un rapport de 1,1:1 à 6:1 et ensuite, c'est-à-dire avant bobinage, on relaxe.

9. Procédé selon les revendications 1 à 8, **caractérisé en ce que** les filaments - enroulés sur bobines - sont soumis à un traitement complémentaire thermique à une température de 50 à 120°C dans une durée de 1 à 96 h.

10. Procédé selon les revendications 1 à 9, **caractérisé en ce que** l'on utilise en tant que macrodiols (A) des polyester-, polyéther- et ou polycarbonate-diols à des poids moléculaires de 1000 à 6000 g/mol, de préférence de 1500 à 4000 g/mol, en mélange avec des polysiloxanes à groupes terminaux hydroxyalkyle à une fonctionnalité en groupes OH de 2 et des poids moléculaires de 1000 à 4000 g/mol.

11. Procédé selon les revendication 1 à 10, **caractérisé en ce que** l'on utilise en tant qu'isocyanates (B) des diisocyanates aromatiques, le cas échéant combinés avec des proportions mineures de diisocyanates (cyclo)aliphatiques mais en mélange avec des polyisocyanates à modification isocyanurate et structure aliphatique et/ou des oligomères dérivant de diisocyanates (cyclo)aliphatiques à une fonctionnalité en groupes NCO supérieure à 2.

12. Procédé selon les revendications 1 à 11, **caractérisé en ce que** l'on utilise en tant qu'agents d'allongement des chaînes (C) les diols 1,2-éthanediol, 1,2- et 1,3-propanediol, 1,4-butanediol, 2,2-diméthyl-1,3-propanediol, 1,6-hexanediol, 3-méthyl-1,5-pentanediol, 1,4-cyclohexanediol et/ou 1,4-bis-(2-hydroxyéthoxybenzène) le cas échéant en combinaison avec des polysiloxanes à groupes terminaux hydroxyalkyle à une fonctionnalité en groupes OH de 2 et des poids moléculaires de 300 à 1500 g/mol.

13. Filaments d'élasthanne obtenus par un procédé selon l'une des revendications 1 à 12.

14. Filaments d'élasthanne selon la revendication 13 à une résistance/finesse supérieure à 1,0 cN/dtex, un allongement à la force de traction maximale supérieur ou égal à 40 % et un allongement résiduel de 25 % au maximum.

15. Filaments d'élasthanne selon la revendication 13 ou 14, ayant une température HDT (heat distortion temperature, température de déformation à la chaleur) d'au moins 185°C et un temps de rupture au chauffage d'au moins 10 s.

16. Filaments d'élasthanne selon l'une des revendications 13 à 15, **caractérisés en ce qu'**ils ont un titre de 20 à 50 dtex.

17. Utilisation des filaments d'élasthanne selon les revendications 13 à 16 pour la fabrication de filés combinés et d'articles planiformes textiles.
